# EUROPÄISCHE PATENTSCHRIFT

(11) **EP 0 608 023 B1**
(45) Veröffentlichungstag und Bekanntmachung des Hinweises auf die Patenterteilung: **03.09.1997**
(21) Anmeldenummer: 94200084.5
(22) Anmeldetag: 14.01.1994
(51) Int. Cl.: C08J 9/14, C08J 9/30, C08L 75/04

(54) **Verfahren zur Herstellung von Formteilen aus flexiblem Polyurethan-Integralschaumstoff**
Process for producing moulded articles made of flexible polyurethane integral foam
Procédé de préparation de pièces moulées en mousse de polyuréthane flexible et integrale

(30) Priorität: 19.01.1993 DE 4301221
(43) Veröffentlichungstag der Anmeldung: 27.07.1994
(73) Patentinhaber: MST Automotive GmbH Automobil-Sicherheitstechnik, 63743 Aschaffenburg (DE)
(72) Erfinder: Schlung, Armin, D-63743 Aschaffenburg (DE); Felder, Ingo, D-63739 Aschaffenburg (DE); Mühleck, Alois, D-63834 Sulzbach (DE)
(74) Vertreter: Fuchs, Luderschmidt & Partner Patentanwälte

(56) Entgegenhaltungen:
- EP-A- 0 355 874
- EP-A- 0 394 769
- EP-A- 0 417 366
- GB-A- 2 244 714
- US-A- 5 081 162

## Beschreibung

Die Erfindung betrifft ein Verfahren zur Herstellung von Formteilen aus flexiblem Polyurethan(PUR)-Integralschaumstoff durch Formschäumung, dessen eine Zellstruktur aufweisender Kern nach außen in eine geschlossene zähe Außenschicht übergeht, durch Polyaddition eines Polyols mit einem Isocyanat in Gegenwart von Wasser unter Abspaltung von blähend und schaumbildend wirkendem Kohlendioxid.

Bei dem am weitesten verbreiteten Verfahren zur Herstellung von Formteilen aus flexiblem PUR-Integralschaumstoff mit einem eine Zellstruktur besitzenden Kern mit einer geschlossenen kompakten Außenschicht wird ein Polyol, vorwiegend Polyester- und Polyether-Polyol, mit einem Isocyanat in Gegenwart eines Chlorfluorkohlenwasserstoffs (CFKW), insbesondere Trichlorfluormethan (R11 gemäß DIN 8962), intensiv vermischt und das schaumfähige Reaktionsgemisch im flüssigen Zustand in einen geschlossenen Formhohlraum eingespritzt. Nach einer Startzeit von nur wenigen Sekunden beginnt eine exotherm verlaufende chemische Reaktion; durch die dabei frei werdende Wärme erreicht der CFKW seinen Verdampfungspunkt, so daß das gebildete Gas die Zellstruktur des Kerns des Formteils erzeugt. Durch die von außen erfolgende Abkühlung der Wand des Formhohlraums und der dadurch verursachten Kondensation des CFKW kommt es zur Ausbildung der geschlossenen zähen Außenschicht des Formteils (DE-B-1 778 457).

Seit Bekanntwerden der schädigenden Wirkung von CFKW auf die Ozonschicht der Atmosphäre ist die Fachwelt bestrebt, CFKW durch weniger gefährliche, blähend und schaumbildend wirkende Treibmittel zu ersetzen. So ist u.a. in der Z.: European Plastics News, September 1991, Seite 45 erwähnt, daß bei der Herstellung von Lenkrädern und Kopfstützen für Kraftfahrzeuge mit einer Ummantelung aus flexiblem PUR-Integralschaumstoff Chlordifluormethan (HCFKW, R22 gemäß DIN 8962), sowie hohe Konzentrationen von Ethylenoxid im Polyol oder Kohlendioxid, das sich bei der Polyaddition von Polyol mit Isocyanat, wenn Wasser zugegen ist, abspaltet, als Treibmittel benutzt werden.

Bei der Herstellung von Formteilen aus flexiblem PUR-Integralschaumstoff durch Polyaddition eines Polyols mit Isocyanat in Gegenwart von Wasser bildet sich bei der exotherm verlaufenden chemischen Reaktion Kohlendioxid, durch das zwar eine Zellstruktur des Kerns des Formteils, jedoch keine hinreichend geschlossene zähe Außenschicht erzielt werden.

Es ist deshalb die Aufgabe der vorliegenden Erfindung, das eingangs beschriebene Verfahren zur Herstellung von Formteilen aus flexiblem PUR-Integralschaumstoff so zu vervollkommnen, daß ihr Kern eine homogene Zellstruktur besitzt und ihre Außenschicht vollkommen geschlossen und zäh ausgebildet ist.

Gelöst ist diese Aufgabe in der Weise, daß in das Polyol 40 bis 60 Vol.% Luft, 0,05 bis 2,5 Gew.% Wasser und 0,25 bis 2,0 Gew.% wenigstens einer der C₁- bis C₆-Kohlenwasserstoffe eingebracht werden.

Die Verwendung des relativ geringen Gewichtsanteils wenigstens eines der C₁- bis C₆-Kohlenwasserstoffe, der neben Kohlendioxid und der Luft auch blähend und schaumbildend wirkt, ermöglicht durch seine Kondensation an der kühleren Wand des geschlossenen Formhohlraums die Ausbildung einer geschlossenen zähen Außenschicht des Formteils aus flexiblem PUR-Integralschaumstoff.

Von den C₁- bis C₆-Kohlenwasserstoffen hat sich Pentan als besonders geeignet für die Ausbildung der geschlossenen zähen Außenschicht des aus flexiblem PUR-Integralschaumstoff bestehenden Formteils erwiesen, wobei insbesondere n-Pentan und seine Isomere in Betracht kommen.

Die C₁- bis C₆-Kohlenwasserstoffe können ganz oder teilweise durch andere niedrig siedende organische Lösungsmittel, vorzugsweise Ether, Ketone und Ester einzeln oder im Gemisch ersetzt werden.

Für die Herstellung des flexiblen PUR-Integralschaumstoffs werden insbesondere aliphatische und aromatische Polyisocyanate und als Polyole Polyester-und Polyether-Polyole eingesetzt. Zusätzliche Hilfsmittel bei der Polyaddition von Polyol mit Isocyanat unter Zugabe von Wasser sind ggf. Katalysatoren, Emulgatoren, Schaumstabilisatoren, Pigmente, Alterungs- und Flammschutzmittel.

Bei der Durchführung des Verfahrens werden zunächst dem Polyol wenigstens einer der C₁- bis C₆-Kohlenwasserstoffe und das bei der Umsetzung von Polyol mit Isocyanat für die Bildung von Kohlendioxid als Treibmittel benötigte Wasser zugemischt, anschließend wird das unter Überdruck in einem geschlossenen Tank befindliche Polyolgemisch mit Luft beladen und dann intensiv mit Isocyanat vermischt. Dieses schaumfähige Reaktionsgemisch wird in flüssigem Zustand in einen geschlossenen Formhohlraum eingespritzt. Nach beendeter Schaumreaktion ist das vorgesehene Volumen des Formhohlraums vollständig ausgefüllt. Das Formteil aus PUR-Integralschaumstoff besitzt eine geschlossene zähe Außenschicht und eine homogene Zellstruktur des Kerns.

Das erfindungsgemäße Verfahren ist nachfolgend anhand eines Ausführungsbeispiels näher erläutert.

Für die Herstellung eines Lenkrads, bestehend aus einem Metallskelett und einer Ummantelung aus flexiblem PUR-Integralschaumstoff, wird Polyether-Polyol, das Katalysatoren, Emulgatoren, Pigmente, Schaumstabilisatoren, Alterungs- und Flammschutzmittel enthält, mit 1 Gew.% n-Pentan und 1 Gew.% Wasser vermischt, diese Mischung in einen geschlossenen Tank eingetragen und in diesem unter einem Überdruck von 4 bar so lange Luft in das Polyether-Polyol-Gemisch eingeschlagen, bis etwa 50 Vol.% des Gemisches aus Luft bestehen. Anschließend werden zwei Gewichtsteile des Polyether-Polyol-Gemisches mit einem Gewichtsteil eines Polyisocyanats intensiv gemischt und das schaumfähige Reaktionsgemisch nach dem Einlegen des Metallskeletts des Lenkrads in die Schäumform und Schließen derselben in den Formhohlraum eingespritzt, so daß der gebildete flexible PUR-Integralschaumstoff den freien Teil des Formhohlraums gerade ausfüllt. Vor dem Einlegen des Metallskeletts in die Schäumform wird diese mit einem Trennmittel ausgesprüht. Nach etwa 3 min wird die Schäumform geöffnet und das mit einer flexiblen PUR-Integralschaumstoff-Schicht ummantelte Lenkrad aus dieser entnommen.

## Patentansprüche

1. Verfahren zur Herstellung von Formteilen aus flexiblem PUR-Integralschaumstoff durch Formschäumung, dessen eine Zellstruktur aufweisender Kern nach außen in eine geschlossene zähe Außenschicht übergeht, durch Polyaddition eines Polyols mit einem Isocyanat in Gegenwart von Wasser unter Abspaltung von blähend und schaumbildend wirkendem Kohlendioxid, dadurch gekennzeichnet, daß in das Polyol 0,05 bis 2,5 Gew.-% Wasser und 0,25 bis 2,0 Gew.-% wenigstens einer der C₁- bis C₆-Kohlenwasserstoffe sowie bei einem Überdruck von ca. 4 bar 40 bis 60 Vol.-% Luft eingebracht werden.

2. Verfahren nach Anspruch 1, dadurch gekennzeichnet, daß als Kohlenwasserstoff Pentan, vorzugsweise n-Pentan und seine Isomere, verwendet wird.

3. Verfahren nach Anspruch 1, dadurch gekennzeichnet, daß die C₁- bis C₆-Kohlenwasserstoffe ganz oder teilweise durch andere niedrigsiedende organische Lösungsmittel, vorzugsweise Ether, Ketone, Ester, einzeln oder in Mischung ersetzbar sind.

## Claims

1. A process for the manufacture of shaped articles from flexible PUR integral foam by foaming in a mould the core of which having a cellular structure merges outwardly into a closed tough skin by polyaddition of a polyol with an isocyanate in the presence of water with release of expanding and foam-forming carbon dioxide, characterised in that in the polyol 0.05 to 2.5% by weight of water and 0.25 to 2.0% by weight of at least one of the hydrocarbons having 1 to 6 carbon atoms as well as at an excess pressure of about 4 bars, 40 to 60% volume air are incorporated.

2. A process according to claim 1, characterised in that as hydrocarbon, pentane, preferably n-pentane and its isomers is used.

3. A process according to claim 1, characterised in that the hydrocarbons having 1 to 6 carbon atoms are replaceable entirely or in part by other low-boiling organic solvents preferably ethers, ketones, esters individually or in combination.

## Revendications

1. Procédé pour la fabrication d'éléments moulés en mousse intégrale PUR flexible par transformation en mousse dans un moule, dont le noyau présentant une structure alvéolaire se transforme vers l'extérieur en une couche externe dure fermée, par polyaddition d'un polyol à un isocyanate en présence d'eau avec dégagement de dioxyde de carbone ayant un effet de gonflement et de formation de mousse, caractérisé en ce qu'on introduit dans le polyol de l'eau à concurrence de 0,05 à 2,5% en poids et au moins un hydrocarbure en C₁-C₆ à concurrence de 0,25 à 2,0% en poids, ainsi que de l'air à concurrence de 40 à 60% en volume sous une surpression d'environ 4 bar.

2. Procédé selon la revendication 1, caractérisé en ce qu'on utilise comme hydrocarbure, le pentane, de préférence le n-pentane et ses isomères.

3. Procédé selon la revendication 1, caractérisé en ce qu'on peut remplacer les hydrocarbures en C₁-C₆, en tout ou en partie, par d'autres solvants organiques à bas points d'ébullition, de préférence des éthers, des cétones, des esters, de manière individuelle ou en mélange.
